# EUROPEAN PATENT SPECIFICATION

(11) **EP 2 602 946 B1**
(45) Date of publication and mention of the grant of the patent: **19.08.2015**
(21) Application number: 12742264.0
(22) Date of filing: 07.03.2012
(51) Int. Cl.: H04J 14/02, H04B 10/272, H04B 10/071, H04Q 11/00

(54) **SINGLE-FIBER BI-DIRECTIONAL OPTICAL MODULE AND PASSIVE OPTICAL NETWORK SYSTEM**
BIDIREKTIONALES OPTISCHES EINZELFASERMODUL UND PASSIVES OPTISCHES NETZWERKSYSTEM
MODULE OPTIQUE BIDIRECTIONNEL À FIBRE UNIQUE ET SYSTÈME DE RÉSEAU OPTIQUE PASSIF

(43) Date of publication of application: 12.06.2013
(73) Proprietor: Huawei Technologies Co., Ltd., Longgang District Shenzhen, Guangdong 518129 (CN)
(72) Inventor: YANG, Sulin, Shenzhen Guangdong 518129 (CN); YIN, Jinrong, Shenzhen Guangdong 518129 (CN)
(74) Representative: Goddar, Heinz J.
(86) International application number: PCT/CN2012/072030
(87) International publication number: WO 2012/103819

(56) References cited:
- EP-A1- 2 337 240
- CN-A- 102 170 309
- CN-A- 102 170 309
- CN-Y- 201 369 727
- US-A1- 2006 007 426
- US-A1- 2006 110 161
- US-A1- 2008 062 408

## Description

### FIELD OF THE INVENTION

The present invention relates to the field of optical communications technologies, and in particular, to a single-fiber bidirectional optical module and a passive optical network system that uses the single-fiber bidirectional optical module.

### BACKGROUND OF THE INVENTION

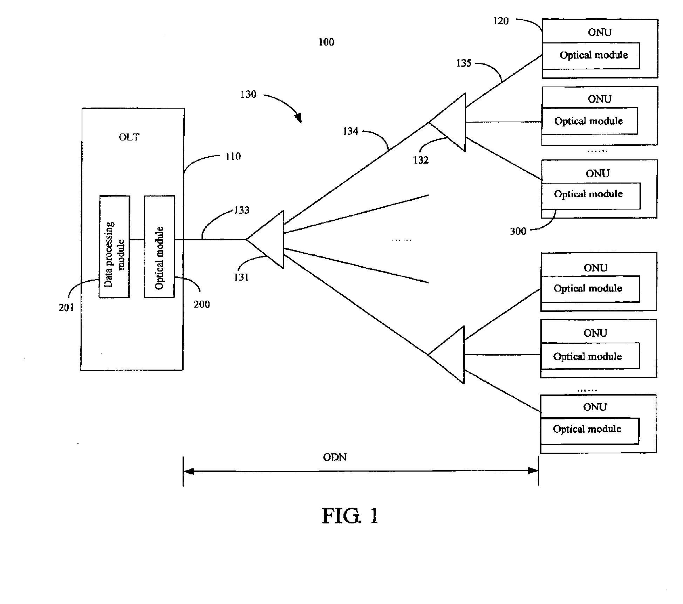

As demand of users for bandwidth increases, bandwidth is an increasingly serious bottleneck to conventional broadband access systems using copper cables. Meanwhile, an optical fiber communications technology that provides a large bandwidth capacity is becoming increasingly mature and its application cost is decreasing year by year. An optical access network has become a powerful competitor in a next generation broadband access network and the passive optical network is the most outstanding one. FIG. 1 shows a general structure of a PON (Passive Optical Network, passive optical network) system. Generally, a passive optical network system includes an OLT (Optical Line Terminal) located at a central office, an ODN (Optical Distribution Network) for branching/coupling or multiplexing/de-multiplexing, and several ONUs (Optical Network Units).

An OTDR (Optical Time Domain Reflectometer) is a preferred instrument for measuring optical fiber properties. The OTDR can evaluate characteristic attributes of a single optical fiber or a complete link, and losses, faults and the distances between events can be observed clearly according to a measurement curve of the OTDR. Therefore, the OTDR is an ideal device for monitoring a conventional optical fiber network. The OTDR works in a mode similar to that of a radar. A laser diode of the OTDR transmits a test signal to an optical fiber to be tested. During transfer in the optical fiber, the test signal forms a backscattering signal due to the property of the optical fiber (non-homogeneous medium) or a reflection signal due to an optical fiber link event (connection, break, or optical fiber back end). A detector of the OTDR detects the strength and arrival time of the backscattering signal or reflection signal and calculates to obtain an attenuation condition of a line that is distributed along the optical fiber length and a curve of events on the line.

The OTDR is capable of precisely locating types and positions of events on an optical fiber line. However, cost is still one of the main factors that restrict the OTDR application in a PON system. How to provide an OTDR method at a low cost to measure a PON network optical fiber line is a problem to be solved.

EP 2 337 240 A1 disclosed a multichannel WDM-PON module with an integrated OTDR function, wherein the OTDR function is realized without employing extra laser.

US2008/0062408 A1 disclosed a detection system, wherein a location of a fault of fiber branch is detected.

US2006/0110161 A1 disclosed an apparatus for monitoring optical fibers, wherein an OTDR incorporated in the central office has a varying wavelength.

CN102170309A disclosed an optical module with integrated OTDR function, wherein an OTDR is incorporated into an OLT

To implement real-time monitoring on the ODN at a low cost, the industry puts forward that an OTDR test function is embedded into the optical module of the OLT to implement an embedded OTDR (also called EOTDR). Currently, in an optical module that is embedded with the OTDR test function, a test signal and a data signal generally share a same transmitter optical subassembly or a same receiver optical subassembly. That is, an OTDR test signal and a downlink data signal are transmitted by a same transmitter optical subassembly or an uplink data signal and a reflection signal of the OTDR test signal are received by a same receiver optical subassembly. However, the optical module that uses the same transmitter subassembly or the same receiver subassembly is generally encapsulated into a triplex optical subassembly. For example, in an optical module that uses the same receiver subassembly, an optical transmitter is arranged in an extension direction of a main optical path (that is a first direction), a test signal receiver is arranged in a second direction perpendicular to the main optical path, and a data signal receiver is arranged in a third direction opposite to the test signal receiver. Due to a volume restriction of the optical module, it is difficult to implement the triplex optical subassembly, and complex processing and a high assembly cost are required.

### SUMMARY OF THE INVENTION

Embodiments of the present invention provide a single-fiber bidirectional optical module to solve the problem that the current optical module is of a complex structure and requires a high cost. Further, the embodiments of the present invention provide a passive optical network system that uses the single-fiber bidirectional optical module.

An embodiment of the present invention is provided in the claim 1, and further details are further illustrated in the dependent claims.

According to the embodiments of the present invention, the single-fiber bidirectional optical module uses a same sending module to send a downlink optical signal and a test optical signal and a same receiving module to receive an uplink optical signal and a backward optical signal corresponding to the test optical signal, and uses a coupler that is arranged on an optical path to transmit the downlink optical signal and the test optical signal that are sent by the sending module and reflect the uplink optical signal and the backward optical signal to the receiving module. By using the preceding design, the optical subassembly inside the optical module may use a single-fiber bidirectional structure instead of using a triplex optical subassembly. Therefore, compared with the prior art, the single-fiber bidirectional optical module provided in the embodiments of the present invention has a simple structure and is easy to manufacture at a low cost.

### BRIEF DESCRIPTION OF THE DRAWINGS

FIG. 1 is a schematic structural diagram of a PON system according to an embodiment of the present invention;
FIG 2 is a schematic structural diagram of a single-fiber bidirectional optical module according to an embodiment of the present invention; and
FIG 3 is another schematic structural diagram of a single-fiber bidirectional optical module according to an embodiment of the present invention.

### DETAILED DESCRIPTION OF THE EMBODIMENTS

To make the objectives, technical solutions, and advantages of the present invention more comprehensible, the following further describes the present invention in detail with reference to the accompanying drawings and the embodiment. It should be understood that the specific embodiment described herein is merely used to explain the present invention and is not intended to limit the present invention.

A single-fiber bidirectional optical module provided in an embodiment of the present invention may be applied to a point-to-multipoint optical fiber network, such as a PON system. Refer to FIG 1, which is a schematic structural diagram of a PON system. The PON system 100 includes at least one OLT 110, a plurality of ONUs 120, and an ODN 130. The OLT 110 is connected to the multiple ONUs 120 through the ODN 130, where a direction from the OLT 110 to the ONUs 120 is a downlink direction and a direction from the ONUs 120 to the OLT 110 is an uplink direction.

The PON system 100 may be a communications network that does not require any active component to implement data distribution between the OLT 110 and the ONUs 120. For example, in a specific embodiment, data distribution between the OLT 110 and the ONU120 may be implemented by a passive optical component (such as an optical splitter) in the ODN 130. In addition, the passive optical network system 100 may be an passive optical network system in asynchronous transfer mode (ATM PON) or a broadband passive optical network (BPON) system that is defined in the ITU-T Recommendation G983, a gigabit-capable passive optical network (GPON) system defined in the ITU-T Recommendation G.984, an Ethernet passive optical network (EPON) defined in the IEEE 802.3ah standard, or a next generation passive optical network (NGA PON, such as a XGPON or a 10G EPON). All of the PON systems defined in the standards are incorporated in the present application by reference in their entireties.

The OLT 110 is generally located in a central position (such as a central office, CO) and it can uniformly manage one or more ONUs 120. The OLT 110 may function as a medium between the ONUs 120 and an upper layer network (not shown in the figure)OLT 110, to forward data received from the upper layer network as downlink data to the ONUs 120 through the ODN 130 and forward uplink data received from the ONUs 120 to the upper layer network.

A detailed structure configuration of the OLT 110 may vary with a specific type of the PON system 100. For example, in an embodiment, the OLT 110 may include an optical module 200 and a data processing module 201. The optical module 200 may be a single-fiber bidirectional optical module provided in this embodiment of the present invention. The optical module 200 sends a downlink data signal provided by the data processing module 201 to the ONUs 120 through the ODN 130, receives uplink data signals sent by the ONUs 120 through the ODN 130, and provides the uplink data signals to the data processing module 201 for data processing. In addition, in a specific embodiment, the optical module 200 may be embedded with an OTDR test function. For example, the optical module 200 may also send a test signal to the ODN 130, receive a reflection signal returned when the test signal is scattered or reflected on the ODN 130, obtain a test curve according to the reflection signal, and further perform an analysis for an optical fiber line status and fault locating.

The ONUs 120 may be arranged in distributed mode in a user side position (such as a user premise). The ONUs 120 may be used as network devices for communications between the OLT 110 and users. Specifically, the ONUs 120 may function as media between the OLT 110 and the users. For example, the ONUs 120 may forward downlink data received from the OLT 110 to the users and forward data received from the users as uplink data to the OLT 110 through the ODN 130. It should be understood that a structure of an ONU120 is similar to that of an optical network terminal (Optical Network Terminal, ONT) and therefore the ONU and the ONT may be interchanged in the solution provided in this application document.

A detailed structure configuration of the ONU120 may vary with a specific type of the PON system 100. For example, in an embodiment, the ONU120 may include an optical module 300 that is configured to receive a downlink data signal sent by the OLT 110 through the ODN 130 and send an uplink data signal to the OLT 110 through the ODN 130. The detailed structure of the optical module 300 may be similar to that of the optical module 200 of the OLT 110. For example, the optical module 300 may also be embedded with the OTDR test function. Specifically, the optical module 300 may further send a test signal to the ODN 130, receive a reflection signal returned when the test signal is scattered or reflected on the ODN 130, and perform an analysis for an optical fiber line status and fault locating according to the reflection signal.

The ODN 130 may be a data distribution system that may include an optical fiber, an optical coupler, an optical splitter, and/or other devices. In an embodiment, the optical fiber, the optical coupler, the optical splitter, and/or other devices may be passive optical components. Specifically, the optical fiber, the optical coupler, the optical splitter, and/or other devices may be components that distribute data signals between the OLT 110 and the ONUs 120 without requiring any power support. In addition, in another embodiment, the ODN 130 may further include one or more processing devices such as an optical amplifier or a relay device. In a branching structure shown in FIG. 1, the ODN 130 may specifically be extended from the optical line terminal 110 to the multiple ONUs 120 in two-stage splitting mode or may also be configured as any other point-to-multipoint (such as single-stage splitting or multi-stage splitting) or point-to-point structure.

Referring to FIG. 1, the ODN 130 uses an optical splitter to implement data distribution. Considering reliability, operation, and maintenance, the ODN 130 may be deployed in two-stage splitting mode and includes a first stage optical splitter 131 and multiple second stage optical splitters 132. A common end of the first stage optical splitter 131 is connected to the optical module 200 of the OLT 110 through a feed optical fiber (Feed Fiber) 133 and its branch ends correspondingly connect to common ends of the second stage optical splitters 132 through distribution fibers 134. Branch ends of each second stage optical splitter 132 further connect to the optical modules 300 of the corresponding ONUs 120 through drop fibers 135 respectively. In a downlink direction, the downlink data signal sent by the OLT 110 is split for the first time by the first stage optical splitter 131 and then is split for the second time by the second stage optical splitters 132 respectively. Therefore, multiple paths of downlink signals are formed and transferred to the ONUs 120. In an uplink direction, uplink data signals sent by the ONUs 120 are combined by the second stage optical splitters 132 and the first stage optical splitter 131 successively and then transferred to the OLT 110, where the first stage optical splitter 131 may be deployed in an optical distribution frame (ODF) near the central office and the second stage optical splitters 132 may be deployed in remote nodes (RN).

According to this embodiment of the present invention, a signal processing unit that enables a sending module to send a test optical signal and processes a backward test signal is arranged on an output end of a receiving module of the optical module, and the coupler in the optical subassembly is enabled to partially transmit a downlink optical signal and partially reflect a backward optical signal. When starting a test, the signal processing unit enables the sending module to send a test optical signal (the wavelength of the test optical signal is the same as that of a downlink optical signal). The test optical signal enters the ODN through the coupler and an optical fiber adapter and generates a backward optical signal on the ODN (the wavelength of the backward optical signal is the same as that of the test optical signal). After being reflected by the coupler, the backward optical signal is received by the receiving module and converted to a backward test signal. After the backward test signal is processed by the signal processing unit, a test result of the ODN to be tested is obtained. In this design, the optical subassembly in the optical module may use a single-fiber bidirectional structure instead of using the triplex optical subassembly. Therefore, the optical module according to this embodiment of the present invention has a simple structure and is easy to manufacture at a low cost.

A single-fiber bidirectional optical module of an OLT that is applied in a GPON and an EPON is used as an example for describing in detail implementation of the present invention in the following.

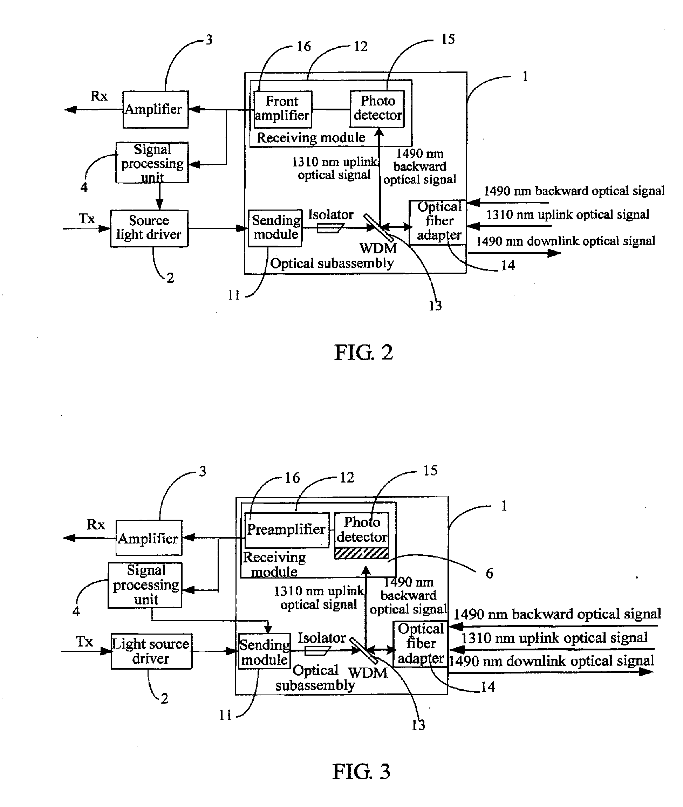

As shown in FIG. 2, the single-fiber bidirectional optical module provided in this embodiment of the present invention includes a bidirectional optical subassembly 1, a light source driver 2, and an amplifier 3. The bidirectional optical subassembly 1 includes a sending module 11, a receiving module 12, a coupler 13, and an optical fiber adapter 14, where the light source driver 2 is connected to the sending module 11, the amplifier 3 is connected to the receiving module 12, and the optical fiber adapter 14 is connected to an ODN (Optical Distribution Network). The single-fiber bidirectional optical module further includes a signal processing unit 4, where the signal processing unit 4 is connected to an output end of the receiving module 12 and is configured to send a test optical signal and process a backward test signal. The coupler 13 partially transmits a downlink optical signal and partially reflects a backward optical signal. When starting a test, the signal processing unit 4 controls the light source driver 2 to drive the sending module 11 to send a test optical signal (the wavelength of the test optical signal is the same as that of the downlink optical signal). The test optical signal at least partially reaches the optical fiber adapter 14 through the coupler 13 and enters the ODN through the optical fiber adapter 14. During transfer in an optical fiber of the ODN, the test optical signal forms a backscattering signal due to the property of the optical fiber (such as non-homogeneous optical fiber medium) or a reflection signal due to an optical fiber link event (such as an optical fiber connection, break, or an optical fiber back end). The backscattering signal and the reflection signal are collectively referred to as a backward optical signal in the following (the wavelength of the backward optical signal is the same as that of the test optical signal). The backward optical signal is returned along the original path, enters the bidirectional optical subassembly 1 through the optical fiber adapter 14, and is reflected by the coupler 13 and received by the receiving module 12. The receiving module 12 may further convert the backward optical signal to a backward test signal (an electrical signal) and output it to the signal processing unit 4. After the backward test signal is processed by the signal processing unit 4, a test result of the ODN to be tested is obtained.

According to this embodiment of the present invention, a downlink optical signal (from an OLT to an ONU, that is from the local end to the peer end) may be a laser light having a wavelength of 1490 nm and an uplink optical signal (from an ONU to an OLT, that is from the peer end to the local end) may be a laser light having a wavelength of 1310 nm. A test optical signal and the downlink optical signal are sent by a same sending module 11, therefore the test optical signal is also a laser light having the wavelength of 1490 nm. Both the test optical signal and the downlink optical signal can generate a backward optical signal on the ODN and return to the coupler 13 through the optical fiber adapter 14, where the wavelength of the backward optical signal is 1490 nm. The coupler 13 may be designed to partially transmit and partially reflect the optical signal having a wavelength of 1490 nm (X% transmitted and Y% reflected) and totally reflect the optical signal having a wavelength of 1310 nm (100% reflected), so that the downlink optical signal and test optical signal that have the wavelength of 1490 nm and are transmitted by the sending module 11 can be transferred to the ODN through the optical fiber adapter 14, the backward optical signal that has the wavelength of 1490 nm and is generated on the ODN and input through the optical fiber adapter 14 can be received by the receiving module 12, and the uplink optical signal that has the wavelength of 1310 nm and is transmitted by the ONU and transferred through the ODN can also be received by the receiving module 12.

In a specific embodiment, the sending module 11 of the bidirectional optical subassembly 1 may be a laser diode (LD), the coupler 13 may be a wavelength division multiplexer (WDM) filter or a thin film filter, and the receiving module 12 may include a photo detector (PD) 15 and a preamplifier 16. The light source driver 2 is a laser driver matching with the laser diode, the preamplifier 16 is preferably a trans-impedance amplifier (TIA), and the amplifier 3 connecting to the preamplifier 16 is preferably a limited amplifier (LA). In addition, the signal processing unit 4 may be an optical time domain reflectometer (OTDR) processor.

According to this embodiment of the present invention, the OLT and optical module support two working modes: communications mode and test mode. In normal communications mode, the signal processing unit 4 is in standby or low-power mode. A data packet sent by the OLT device to the peer end is sent to the OLT optical module through a data interface Tx and when the laser diode 11 is driven by the laser driver 2, a downlink optical signal having the wavelength of 1490 nm is generated within the optical module. The downlink optical signal is coupled to the ODN through the coupler 13 and the optical fiber adapter 14 and is transferred to the ONU. Through the optical fiber adapter 14 and the coupler 13, the uplink optical signal that has the wavelength of 1310 nm and is sent by the peer end is received by the photo detector 15 and converted to an electrical signal. The electrical signal is amplified by the preamplifier 16 and the limited amplifier 3 to a digital signal and is output to the OLT device from the optical module through a data interface Rx.

Before the test mode is started, the OLT may firstly suspend data sending of the peer ONUs so that the uplink optical signal does not interfere with receiving of the backward optical signal. For example, the OLT device may provide a control packet, which controls the ONU to suspend sending uplink data, to the optical module. The light source driver 2 of the optical module drives the laser diode 11 to generate a corresponding downlink optical signal. The ONUs analyze the downlink optical signal to obtain the control packet and suspend, according to the control packet, sending uplink data in a test time segment specified by the OLT.

In the test mode, the OLT instructs the signal processing unit 4 of the optical module to start a test, where the OLT may deliver a command through an I2C interface of the optical module (not shown in the figure) or control, through a control signal line, the signal processing unit 4 to start a test. After receiving a test start command, the signal processing unit 4 sends a forward test signal to the laser driver 2. The laser driver 2 drives the laser diode 11 to transmit a corresponding test optical signal. For example, the laser driver 2 may modulate the test signal into an optical signal transmitted by the laser diode 11, thereby generating a test optical signal. When the test optical signal transmitted by the laser diode 11 passes through the coupler 13, X% of the test optical signal is transmitted through the coupler 13 and coupled to the ODN through the optical fiber adapter 14. During transfer in an optical fiber of the ODN, the test optical signal forms a backscattering signal due to the property of the optical fiber (such as non-homogeneous optical fiber medium) or a reflection signal due to an optical fiber link event (such as an optical fiber connection, break, or an optical fiber back end) and therefore generates a backward optical signal on the ODN. The backward optical signal enters the optical module through the optical fiber adapter 14 and is transferred to the coupler 13, where Y% of the backward optical signal is reflected by the coupler 13, received by the photo detector 15, and converted to a backward test signal, and the backward test signal is pre-amplified by the preamplifier 16 and received by the signal processing unit 4. The signal processing unit 4 may process the backward test signal (including amplifying, sampling, and digital processing) to obtain a test curve of the ODN to be tested; alternatively, the signal processing unit 4 may only preprocess the backward test signal and provide the preprocessed backward test signal to the OLT through the I2C interface or the control signal line and the OLT performs analysis processing to obtain the test curve of the ODN to be tested.

According to this embodiment, the signal processing unit 4 outputs the forward test signal to the laser driver 2, the laser driver 2 drives the laser diode 11 to send a test optical signal, and then the signal processing unit 4 is connected to the laser diode 11 through the laser driver 2, as shown in FIG. 2. Alternatively, the signal processing unit 4 may directly drive the laser diode 11 to transmit a test optical signal. For example, the signal processing unit 4 may directly modulate the forward test signal into an optical signal transmitted by the laser diode 11 to generate a test optical signal and then the signal processing unit 4 directly is connected to the laser diode 11, as shown in FIG 3.

According to this embodiment of the present invention, a test optical signal may be sent in two forms: The first one is that sending of the downlink data is stopped (the drive of an LDD data part may be shut off or the OLT device may stop sending the downlink data) and only a test optical signal is sent; the second one is that the sending of the downlink data is not stopped and a downlink optical signal is sent (at 1490 nm) at the same time when the test optical signal is sent, for example, the test optical signal may be modulated into a downlink data signal for sending by using an amplitude modulation method, that is, the optical signal sent by the laser diode 11 is a superposed signal of the downlink optical signal and the test optical signal.

Generally, a data communications rate is relatively high (such as the uplink 1310 nm rate of the GPON and EPON is 1.25 Gbps) and a rate of an OTDR test signal is relatively low (generally around 10 MHz). According to this embodiment, the preamplifier 16 is preferably a two-rate TIA that includes a low-rate TIA and a high-rate TIA, so that noise interference is reduced and a relatively good linearity is maintained during an OTDR test, where the low-rate TIA is configured to receive an OTDR test signal and its output end is connected to the signal processing unit 4, and the high-rate TIA is configured to receive an uplink data signal sent by the peer ONU and its output end is connected to the amplifier 3. According to other alternative embodiments, a channel selection unit (not shown in the figure) may further be arranged on an output end of the preamplifier 16 by the optical module and is configured to selectively output the uplink data signal output by the receiving module 12 to the amplifier 3 or output the backward test signal to the signal processing unit 4.

In addition, a control signal of the two-rate TIA (that is, a control signal for selecting the high or low-rate TIA) is provided by the signal processing unit 4. In the communications mode, the signal processing unit 4 outputs a control signal to select a high-rate TIA and receives, according to the data receiving process, the uplink data signal sent by the peer ONU. In the test mode, the signal processing unit 4 outputs a control signal to select the low-rate TIA, receives the test optical signal according to the preceding method, and sends the obtained backward test signal to the signal processing unit 4. The two-rate TIA may be directly controlled by the OLT device through a hardware interface to select the high-rate TIA or the low-rate TIA.

On the other hand, in the communications mode, the downlink optical signal having the wavelength of 1490 nm that is sent by the OLT to the peer ONU generates a backward optical signal in an optical fiber. The backward optical signal is returned to the optical module of the OLT and then reaches the coupler 13 through the optical fiber adapter 14. Because the coupler 13 may partially reflect Y% of the optical signal having the wavelength of 1490 nm, Y% of the backward optical signal is reflected to the photo detector 15 through the coupler 13. This part of the backward optical signal is superposed with the uplink optical signal and received by the photo detector 15. For data receiving, this part of the backward optical signal is equivalent to a noise signal that affects data receiving performance. In addition, if a peer ONU sends an uplink optical signal in the test mode, the uplink optical signal received by the photo detector 15 is much stronger than a backward optical signal corresponding to a test optical signal. In the test mode, the uplink optical signal sent by the peer ONU is equivalent to a noise signal for the test optical signal. To eliminate a noise signal in the communications and test modes and improve data receiving and OTDR test performance, in a specific embodiment, the bidirectional optical subassembly 1 may further include an adjustable filter 6, where the adjustable filter 6 may be arranged on a receiving end face of the photo detector 15 and is configured to filter out the backward optical signal corresponding to the downlink optical signal in the communications mode and the uplink optical signal sent by the peer ONU in the test mode, as shown in FIG. 3.

According to this embodiment of the present invention, after an adjustable filter 6 is added, a channel central wavelength of the adjustable filter 6 needs to be controlled for the communications and test modes. In the communications mode, the adjustable filter 6 is controlled to filter out a backward optical signal having a wavelength of 1490 nm and pass an uplink optical signal having a wavelength of 1310 nm; and in the test mode, the adjustable filter 6 is controlled to filter out an uplink optical signal having a wavelength of 1310 nm and pass the backward optical signal having a wavelength of 1490 nm.

The foregoing descriptions are merely exemplary embodiments of the present invention, but are not intended to limit the present invention.

## Claims

1. A single-fiber bidirectional optical module (1), comprising a sending module (11), a receiving module (12), and a coupler (13), wherein:
the sending module is configured to send a first downlink optical signal that have a first wavelength in communications mode;
the sending module is further configured to send a test optical signal that have a first wavelength in test mode, or the sending module is further configured to send a second downlink optical signal that have a first wavelength in test mode, wherein a test optical signal is amplitude modulated into the second downlink optical signal;
the receiving module comprises a photo detector (15), wherein the photo detector is configured to receive an uplink optical signal having a second wavelength in communications mode, and receive a backward optical signal in test mode, wherein the backward optical signal has the first wavelength and is corresponding to the test optical signal, and the backward optical signal is generated during transmission of the test optical signal in an optical fiber network; and
the coupler (13) is configured to transmit signals that have the first wavelength to the optical fiber network and reflect the backward optical signal having the first wavelength and the uplink optical signal having the second wavelength to the receiving module.

2. The single-fiber bidirectional optical module according to claim 1, comprising: a signal processing unit (4), wherein the signal processing unit is connected to the sending module through a light source driver and is configured to control, in test mode, the light source driver to drive the sending module to send the test optical signal, and process a backward test signal provided by the receiving module.

3. The single-fiber bidirectional optical module according to claim 1, further comprising a signal processing unit, wherein the signal processing unit is connected to the sending module and is configured to directly drive, in test mode, the sending module to send the test optical signal, and process a backward test signal provided by the receiving module.

4. The single-fiber bidirectional optical module according to claim 2 or 3, wherein the sending module is further configured to send, before the test mode is started, to a peer device a control packet used to control the peer device to suspend sending of the uplink optical signal.

5. The single-fiber bidirectional optical module according to claim 4, wherein the receiving module further comprises a preamplifier (16);
the photo detector is further configured to convert the uplink optical signal to an uplink electrical signal, receive the backward optical signal, and convert the backward optical signal to a backward test signal in test mode; and
the preamplifier comprises a low-rate trans-impedance amplifier and a high-rate trans-impedance amplifier, the low-rate trans-impedance amplifier is connected to the signal processing unit and is configured to amplify the backward test signal and provides the amplified backward test signal to the signal processing unit, and the high-rate trans-impedance amplifier is configured to amplify the uplink electrical signal.

6. The single-fiber bidirectional optical module according to claim 5, wherein the signal processing unit is further configured to output a control signal to the preamplifier to control the preamplifier to select the low-rate trans-impedance amplifier in test mode and select the high-rate trans-impedance amplifier in a communications mode.

7. The single-fiber bidirectional optical module according to claim 1, wherein the sending module stops sending the downlink optical signal in the test mode.

8. A passive optical network system, comprising an optical line terminal, an optical distribution network, and multiple optical network units, wherein the optical line terminal is connected to the optical network units through the optical distribution network, the optical line terminal comprises an optical module that is configured to send and receive an optical signal, and the optical module is the single-fiber bidirectional optical module according to any one of claims 1 to 7.

## Patentansprüche

1. Bidirektionales optisches Einfasermodul (1), das ein Sendemodul (11), ein Empfangsmodul (12) und einen Koppler (13) umlasst, wobei:
das Sendemodul konfiguriert ist, ein erstes optisches Abwärtsstreckensignal, das eine erste Wellenlänge aufweist, in einem Kommunikationsmodus zu senden;
das Sendemodul ferner konfiguriert ist, ein optisches Testsignal, das eine erste Wellenlänge aufweist, in einem Testmodus zu senden, oder das Sendemodul ferner konfiguriert ist, ein zweites optisches Abwärtsstrcckensignal, das eine erste Wellenlänge aufweist, in dem Testmodus zu senden, wobei ein optisches Testsignal in das zweite optische Abwärtsstreckensignal amplitudenmoduliert ist;
das Einplängsmodul einen Photodetektor (15) umfasst, wobei der Photodetektor konfiguriert ist, ein optisches Aufwärtsstreckensignal, das eine zweite Wellenlänge aufweist, in dem Kommunikationsmodus zu empfangen und ein optisches Rückwärtssignal in dem Testmodus zu empfangen, wobei das optische Rückwärtssignal die erste Wellenlänge aufweist und dem optischen Testsignal entspricht und das optische Rückwärtssignal während der Übertragung des optischen Testsignals in einem optischen Fasernetz erzeugt wird; und
der Koppler (13) konfiguriert ist, Signale, die die erste Wellenlänge aufweisen, zu dem optischen Fasernetz zu übertragen und das optische Rückwärtssignal, das die erste Wellenlänge aufweist, und das optische Aufwärtsstreckensignal, das die zweite Wellenlänge aufweist, zu dem Empfangsmodul zu reflektieren.

2. Bidirektionales optisches Einfasermodul nach Anspruch 1, das Folgendes umfasst:
eine Signalverarbeitungseinheit (4), wobei die Signalverarbeitungseinheit durch einen Lichtquellentreiber mit dem Sendemodul verbunden ist und konfiguriert ist, in dem Testmodus den Lichtquellentreiber zu steuern, um das Sendemodul anzusteuern, um das optische Testsignal zu senden, und ein durch das Empfangsmodul bereitgestelltes Rückwärtstestsignal zu verarbeiten.

3. Bidirektionales optisches Einfasermodul nach Anspruch 1, das ferner eine Signalverarbeitungseinheit umfasst, wobei die Signalverarbeitungseinheit mit dem Sendemodul verbunden ist und konfiguriert ist, in dem Testmodus das Sendemodul direkt anzusteuern, um das optische Testsignal zu senden, und ein durch das Empfangsmodul bereitgestelltes Rückwärtstestsignal zu verarbeiten.

4. Bidirektionales optisches Einfasermodul nach Anspruch 2 oder 3, wobei das Sendemodul ferner konfiguriert ist, an eine Peer-Vorrichtung ein Steuerpaket, das verwendet wird, um die Peer-Vorrichtung zu steuern, um das Senden des optischen Aufwärtsstreckensignals einzustellen, zu senden, bevor der Testmodus gestartet wird.

5. Bidirektionales optisches Einfasermodul nach Anspruch 4, wobei das Empfangsmodul ferner einen Vorverstärker (16) umfasst;
der Photodetektor ferner konfiguriert ist, das optische Aufwärtsstreckensignal in ein elektrisches Aufwärtsstreckensignal umzusetzen, das optische Rückwärtssignal zu empfangen und das optische Rückwärtssignal in dem Testmodus in ein Rückwärtstestsignal umzusetzen; und
der Vorverstärker einen Transimpedanzverstärker mit tiefer Rate und einen Transimpedanzverstärker mit hoher Rate umfasst, wobei der Transimpedanzverstärker mit tiefer Rate mit der Signalverarbeitungseinheit verbunden ist und konfiguriert ist, das Rückwärtstestsignal zu verstärken, und das verstärkte Rückwärtstestsignal der Signalverarbeitungseinheit bereitstellt, und der Transimpedanzverstärker mit hoher Rate konfiguriert ist, das elektrische Aufwärtsstreckensignal zu verstärken.

6. Bidirektionales optisches Einfasermodul nach Anspruch 5, wobei die Signalverarbeitungseinheit ferner konfiguriert ist, ein Steuersignal an den Vorverstärker auszugeben, um den Vorverstärker zu steuern, um den Transimpedanzverstärker mit tiefer Rate in dem Testmodus auszuwählen und den Transimpedanzverstärker mit hoher Rate in einem Kommunikationsmodus auszuwählen.

7. Bidirektionales optisches Einfasermodul nach Anspruch 1, wobei das Sendemodul in dem Testmodus das Senden des optischen Abwärtsstreckensignals stoppt.

8. Passives optisches Netzsystem, das einen optischen Leitungsanschluss, ein optisches Verteilungsnetz und mehrere optische Netzeinheiten umfasst, wobei der optische Leitungsanschluss durch das optische Verteilungsnetz mit den optischen Netzeinheiten verbunden ist, der optische Leitungsanschluss ein optisches Modul umfasst, das konfiguriert ist, ein optisches Signal zu senden und zu empfangen, und das optische Modul das bidirektionale optische Einfasermodul nach einem der Ansprüche 1 bis 7 ist.

## Revendications

1. Module optique monofibre bidirectionnel (1) comprenant un module d'envoi (11), un module de réception (12) et un coupleur (13) dans lequel :
le module d'envoi est configuré pour envoyer un premier signal optique de liaison descendante qui a une première longueur d'onde dans un mode de communications ;
le module d'envoi est configuré en outre pour envoyer un signal optique de test qui a une première longueur d'onde en mode de test, ou le module d'envoi est configuré en outre pour envoyer un second signal optique de liaison descendante qui a une première longueur d'onde en mode de test, dans lequel un signal optique de test est modulé en amplitude en le second signal optique de liaison descendante ;
le module de réception comprend un photodétecteur (15), le photodétecteur étant configuré pour recevoir un signal optique de liaison montante ayant une seconde longueur d'onde en mode de communications, et recevoir un signal optique de retour en mode de test, dans lequel le signal optique de retour a la première longueur d'onde et correspond au signal optique de test, et le signal optique de retour est généré durant la transmission du signal optique de test dans un réseau à fibre optique ; et
le coupleur (13) est configuré pour transmettre des signaux qui ont la première longueur d'onde au réseau à fibre optique et réfléchir le signal optique de retour ayant la première longueur d'onde et le signal optique de liaison montante ayant la seconde longueur d'onde au module de réception.

2. Module optique monofibre bidirectionnel selon la revendication 1, comprenant : une unité de traitement de signal (4), l'unité de traitement de signal étant connectée au module d'envoi par le biais d'un pilote de source de lumière et étant configurée pour commander, en mode de test, le pilote de source de lumière pour exciter le module d'envoi afin d'envoyer le signal optique de test, et traiter un signal de test de retour Fourni par le module de réception.

3. Module optique mono fibre bidirectionnel selon la revendication 1, comprenant en outre : une unité de traitement de signal, l'unité de traitement de signal étant connectée au module d'envoi et étant configurée pour exciter directement, en mode de test, le module d'envoi afin d'envoyer le signal optique de test, et traiter un signal de test de retour fourni par le module de réception.

4. Module optique monofibre bidirectionnel selon la revendication 2 ou 3, dans lequel le module d'envoi est configuré en outre pour envoyer, avant le début du mode de test, à un dispositif homologue, un paquet de commande utilisé pour commander au dispositif homologue d'arrêter l'envoi du signal optique de liaison montante.

5. Module optique monofibre bidirectionnel selon la revendication 4, dans lequel le module de réception comprend en outre un préamplificateur (16) ;
le photodétecteur est configuré en outre pour convertir le signal optique de liaison montante en un signal électrique de liaison montante, recevoir le signal optique de retour, et convertir le signal optique de retour en un signal de test de retour en mode de test ; et
le préamplificateur comprend un amplificateur de transimpédance de faible débit et un amplificateur de transinlpédance de haut débit, l'amplificateur de transimpédance de faible débit est connecté à l'unité de traitement de signal et est configuré pour amplifier le signal de test de retour et fournir le signal de test de retour amplifié à l'unité de traitement de signal et l'amplificateur de transimpédance de haut débit est configuré pour amplifier le signal électrique de liaison montante.

6. Module optique monofibre bidirectionnel selon la revendication 5, dans lequel l'unité de traitement de signal est configurée en outre pour produire en sortie un signal de commande destiné au préamplificateur pour commander le préamplificateur afin de sélectionner l'amplificateur de transimpédance de faible débit en mode de test et de sélectionner l'amplificateur de transimpédance de haut débit en mode de communication.

7. Module optique monofibre bidirectionnel selon la revendication 1, dans lequel le module d'envoi arrête d'envoyer le signal optique de liaison descendante dans le mode de test.

8. Système de réseau optique passif, comprenant un terminal de ligne optique, un réseau de distribution optique, et de multiples unités de réseau optique, dans lequel le terminal de ligne optique est connecté aux unités de réseau optique par le biais du réseau de distribution optique, le terminal de ligne optique comprend un module optique qui est configuré pour envoyer et recevoir un signal optique, et le module optique est le module optique bidirectionnel monofibre selon l'une quelconque des revendications 1 à 7.
